# EUROPEAN PATENT APPLICATION

(11) **EP 4 395 109 A1**
(43) Date of publication of application: **03.07.2024**
(21) Application number: 22886044.1
(22) Date of filing: 26.10.2022
(51) Int. Cl.: H02J 7/00, H02M 7/02, H02M 7/21

(54) **CHARGING CONTROL METHOD AND SYSTEM, AND VEHICLE**

(30) Priority: 29.10.2021 CN 202111276297
(71) Applicant: BYD Company Limited, Shenzhen, Guangdong 518118 (CN)
(72) Inventor: LIU, Weidong, Shenzhen, Guangdong 518118 (CN); WANG, Chao, Shenzhen, Guangdong 518118 (CN); WANG, Xinghui, Shenzhen, Guangdong 518118 (CN)
(74) Representative: Arnold & Siedsma
(86) International application number: PCT/CN2022/127796
(87) International publication number: WO 2023/072169

(57) **Abstract**

A method and system for charging control, and a vehicle. The method includes: when a first end of a switching circuit (102) is connected to external power supply (105), acquiring a phase voltage and a line voltage of any two-phase first terminals in M phases of first terminals; determining a power supply mode of the external power supply (105) according to the phase voltage and the line voltage; and controlling the switching circuit (102) and a charging circuit (103) to charge a target battery (106) according to the power supply mode.

## Description

### CROSS-REFERENCE TO RELATED APPLICATIONS

The present disclosure claims priority to Chinese Patent Application No. 202111276297.0 filed on October 29, 2021 and entitled "METHOD AND SYSTEM FOR CHARGING CONTROL, AND VEHICLE", which is incorporated herein by reference in its entirety.

### FIELD

The present disclosure relates to the technical field of charging, and specifically, to a method and system for charging control, and a vehicle.

### BACKGROUND

In recent years, with continuous development of the new energy technology, increasing new energy vehicles will enter the society and families, which brings great convenience to people' travel. To improve the charging efficiency of a vehicle, a vehicle-mounted system for charging control of the new energy vehicle may support charging of the vehicle through three-phase power supply. In addition, to be compatible with single-phase current, the vehicle-mounted system for charging control also needs to support charging of the vehicle through single-phase power supply. Thus, to be compatible with the three-phase power supply and the single-phase power supply, the system for charging control needs to identify a power supply mode. However, in the related art, there is a situation that the system for charging control identifies the power supply mode mistakenly, which affects the vehicle charging efficiency, and even causes a charging failure.

### SUMMARY

An object of the present disclosure is to provide a method and system for charging control, and a vehicle, to solve the above problems in the related art.

To achieve the above object, provided is a method for charging control in a first aspect of the present disclosure. The method for charging control is applied to a controller in a system for charging control. The system for charging control includes a controller, a switching circuit, and a charging circuit. A first end of the switching circuit is connected to external power supply. A second end of the switching circuit is connected to a first end of the charging circuit. A second end of the charging circuit is connected to a target battery to be charged. The controller is connected to the switching circuit and the charging circuit. The first end of the switching circuit includes M phases of first terminals. The M phases of first terminals are connected to live line interfaces of the external power supply. The method includes the following steps.

When the first end of the switching circuit is connected to the external power supply, a phase voltage and a line voltage of any two-phase first terminals in the M phases of first terminals are acquired.

A power supply mode of the external power supply is determined according to the phase voltage and the line voltage.

The switching circuit and the charging circuit are controlled to charge the target battery according to the power supply mode.

Optionally, the M phases of first terminals include three phases of first terminals. The power supply mode of the external power supply includes a single-phase current mode and a three-phase current mode. The determining a power supply mode of the external power supply according to the phase voltage and the line voltage includes the following steps.

If the phase voltage is greater than or equal to the line voltage, it is determined that the power supply mode of the external power supply is the single-phase current mode. Or,
if the phase voltage is less than the line voltage, it is determined that the power supply mode of the external power supply is the three-phase current mode.

Optionally, the three phases of first terminals include an A-phase terminal, a B-phase terminal and a C-phase terminal. The second end of the switching circuit includes an A'-phase terminal, a B'-phase terminal and a C'-phase terminal. The switching circuit further includes a first switch, a second switch, a third switch, a first precharge resistor, a second precharge resistor and a third precharge resistor. The first switch is configured to connect the A-phase terminal to the A'-phase terminal. The second switch is configured to connect the B-phase terminal to the B'-phase terminal. The third switch is configured to connect the C-phase terminal to the C'-phase terminal. The first precharge resistor is connected to the first switch in parallel. The second precharge resistor is connected to the second switch in parallel. The third precharge resistor is connected to the third switch in parallel.

The controlling the switching circuit and the charging circuit to charge the target battery according to the power supply mode includes the following steps.

When the power supply mode is the three-phase current mode, a first difference value between the line voltage and a first bus voltage of the charging circuit is acquired.

If the first difference value is less than or equal to a first voltage threshold, the first switch, the second switch, and the third switch are controlled to be switched on, and the charging circuit is controlled to charge the target battery according to the three-phase charging mode.

Optionally, the switching circuit further includes a fourth switch. The fourth switch is configured to connect the A-phase terminal to the B-phase terminal. The controlling the switching circuit and the charging circuit to charge the target battery according to the power supply mode further includes the following steps.

When the power supply mode is the single-phase current mode, a second difference value between the phase voltage and a second bus voltage of the charging circuit is acquired.

If the second difference value is less than or equal to a second voltage threshold, the first switch, the second switch, and the fourth switch are controlled to be switched on, the third switch is controlled to be switched off, and the charging circuit is controlled to charge the target battery according to a single-phase charging mode.

Optionally, the method further includes the following steps.

When the charging circuit is controlled to end charging of the target battery according to the single-phase charging mode, the first switch, the second switch, the third switch, and the fourth switch are controlled to be switched off.

A third voltage of the A-phase terminal and a fourth voltage of the B'-phase terminal are acquired.

If the third voltage is greater than or equal to a third voltage threshold and the fourth voltage is greater than or equal to a fourth voltage threshold, it is determined that the fourth switch has a short circuit.

Optionally, the charging circuit includes a power factor correction circuit and an inverter circuit. The second end of the switching circuit is connected to a first end of the power factor correction circuit. A second end of the power factor correction circuit is connected to a first end of the inverter circuit. A second end of the inverter circuit is connected to the target battery. The method further includes the following steps.

When the charging circuit is controlled to end charging of the target battery according to the single-phase charging mode, the first switch, the second switch, the third switch, and the fourth switch are controlled to be switched off, and the external power supply is controlled to stop supplying electricity.

A direct current voltage of the target battery is inverted into single-phase current through the inverter circuit and the power factor correction circuit, and the single-phase current is transmitted to the A-phase terminal.

A fifth voltage of the A-phase terminal and a sixth voltage of the B-phase terminal are acquired.

If the fifth voltage is greater than or equal to a fifth voltage threshold and the sixth voltage is greater than or equal to a sixth voltage threshold, it is determined that the fourth switch has a short circuit.

In a second aspect, the present disclosure provides a system for charging control. The system for charging control includes a controller, a switching circuit, and a charging circuit. A first end of the switching circuit is connected to external power supply. A second end of the switching circuit is connected to a first end of the charging circuit. A second end of the charging circuit is connected to a target battery to be charged. The controller is connected to the switching circuit and the charging circuit. The first end of the switching circuit includes M phases of first terminals. The M phases of first terminals are connected to live line interfaces of the external power supply. The controller is configured to:
when the first end of a switching circuit is connected to the external power supply, acquire a phase voltage and a line voltage of any two-phase first terminals in the M phases of first terminals;
determine a power supply mode of the external power supply according to the phase voltage and the line voltage; and
control the switching circuit and the charging circuit to charge the target battery according to the power supply mode.

Optionally, the M phases of first terminals include three phases of first terminals. The controller is configured to:
if the phase voltage is greater than or equal to the line voltage, determine the power supply mode of the external power supply to be the single-phase current mode; or,
if the phase voltage is less than the line voltage, determine the power supply mode of the external power supply to be the three-phase current mode.

Optionally, the three phases of first terminals include an A-phase terminal, a B-phase terminal and a C-phase terminal. The second end of the switching circuit includes an A'-phase terminal, a B'-phase terminal and a C'-phase terminal. The switching circuit further includes a first switch, a second switch, a third switch, a first precharge resistor, a second precharge resistor and a third precharge resistor. The first switch is configured to connect the A-phase terminal to the A'-phase terminal. The second switch is configured to connect the B-phase terminal to the B'-phase terminal. The third switch is configured to connect the C-phase terminal to the C'-phase terminal. The first precharge resistor is connected to the first switch in parallel. The second precharge resistor is connected to the second switch in parallel. The third precharge resistor is connected to the third switch in parallel.

The controller is configured to:
when the power supply mode is the three-phase current mode, acquire a first difference value between the line voltage and a first bus voltage of the charging circuit; and
if the first difference value is less than or equal to a first voltage threshold, control the first switch, the second switch, and the third switch to be switched on, and control the charging circuit to charge the target battery according to the three-phase charging mode.

Optionally, the switching circuit further includes a fourth switch. The fourth switch is configured to connect the A-phase terminal to the B-phase terminal. The controller is configured to:
when the power supply mode is the single-phase current mode, acquire a second difference value between the phase voltage and a second bus voltage of the charging circuit; and
if the second difference value is less than or equal to a second voltage threshold, control the first switch, the second switch, and the fourth switch to be switched on, control the third switch to be switched off, and control the charging circuit to charge the target battery according to a single-phase charging mode.

Optionally, the controller is further configured to:
when the charging circuit is controlled to end charging of the target battery according to the single-phase charging mode, control the first switch, the second switch, the third switch, and the fourth switch to be switched off;
acquire a third voltage of the A-phase terminal and a fourth voltage of the B'-phase terminal; and
if the third voltage is greater than or equal to a third voltage threshold and the fourth voltage is greater than or equal to a fourth voltage threshold, determine that the fourth switch has a short circuit.

Optionally, the charging circuit includes a power factor correction circuit and an inverter circuit. The second end of the switching circuit is connected to a first end of the power factor correction circuit. A second end of the power factor correction circuit is connected to a first end of the inverter circuit. A second end of the inverter circuit is connected to the target battery. The controller is further configured to:
when the charging circuit is controlled to end charging of the target battery according to the single-phase charging mode, control the first switch, the second switch, the third switch, and the fourth switch to be switched off, and controlling the external power supply to stop supplying electricity;
invert a direct current voltage of the target battery into single-phase power supply through the inverter circuit and the power factor correction circuit, and transmit the single-phase current to the A-phase terminal;
acquire a fifth voltage of the A-phase terminal and a sixth voltage of the B-phase terminal; and
if the fifth voltage is greater than or equal to a fifth voltage threshold and the sixth voltage is greater than or equal to a sixth voltage threshold, determine that the fourth switch has a short circuit.

In a third aspect, the present disclosure provides a vehicle, which includes the system for charging control in the second aspect of the present disclosure.

With adoption of the above technical solution, when the first end of the switching circuit is connected to the external power supply, the phase voltage and the line voltage of any two phases of first terminals in the M phases of first terminals are acquired. A power supply mode of the external power supply is determined according to the phase voltage and the line voltage. The switching circuit and the charging circuit are controlled to charge the target battery according to the power supply mode. Thus, through combined judgment on the phase voltage and the line voltage, the power supply mode of the external power supply is identified, so that the power supply mode identification accuracy can be improved, the problem of mistakenly identifying the power supply mode is avoided, and therefore, the problem of low charging efficiency or inability to charge caused by mistakenly identifying the power supply mode is also avoided.

Other features and advantages of the present disclosure will be described in detail in the following specific implementations.

### BRIEF DESCRIPTION OF THE DRAWINGS

The accompanying drawings are intended to provide further understanding of the present disclosure and constitute a part of this specification. The accompanying drawings and the specific implementations below are used together for explaining the present disclosure rather than constituting a limitation to the present disclosure. In the accompanying drawings:
FIG. 1 is a block diagram of a system for charging control provided by an embodiment of the present disclosure;
FIG. 2 is a block diagram of another system for charging control provided by an embodiment of the present disclosure;
FIG. 3 is a block diagram of another system for charging control provided by an embodiment of the present disclosure;
FIG. 4 is a flowchart of a method for charging control provided by an embodiment of the present disclosure; and
FIG. 5 is a block diagram of a vehicle provided by an embodiment of the present disclosure.

### DETAILED DESCRIPTION

Specific implementations of the present disclosure are described in detail below with reference to the accompanying drawings. It should be understood that the specific implementations described herein are merely used to describe and explain the present disclosure, but are not intended to limit the present disclosure.

It should be noted that in the present disclosure, the terms "first", "second", and the like are only used for a differentiated description purpose rather than being construed to indicate or imply relative importance, and may not be construed as an indication or implication of a sequence. The terms "S101", "S102", "S201", "S202", and the like are used for distinguishing steps rather than being construed as executing the steps of the method in a special order or in a precedence order. When the following description involves the accompanying drawings, unless otherwise indicated, the same numerals in different accompanying drawings represent the same or similar elements.

First, an application scenario of the present disclosure will be described. The present disclosure may be applied to a charging scenario, specifically to a scenario where a power battery of a new energy vehicle is charged through an alternating current. To improve the vehicle charging efficiency, a vehicle-mounted system for charging control of the new energy vehicle may identify a power supply mode of external power supply, so as to charge the power battery through three-phase power supply or single-phase power supply.

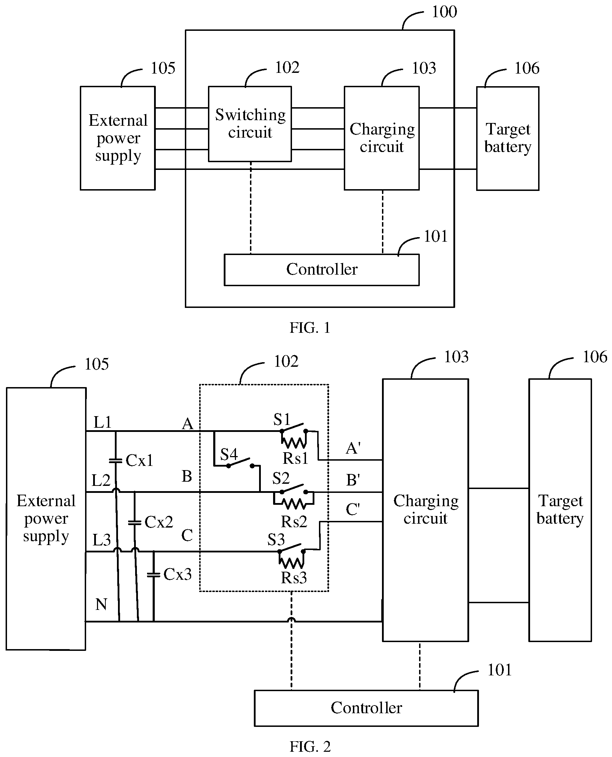

FIG. 1 is a block diagram of a system for charging control provided by an embodiment of the present disclosure. As shown in FIG. 1, the system for charging control may include: a controller 101, a switching circuit 102 and a charging circuit 103. A first end of the switching circuit 102 is connected to external power supply 105. A second end of the switching circuit 102 is connected to a first end of the charging circuit 103. A second end of the charging circuit 103 is connected to a target battery 106 to be charged. The controller 101 is connected to the switching circuit 102 and the charging circuit 103. The first end of the switching circuit 103 includes M phases of first terminals. The M phases of first terminals are connected to live line interfaces of the external power supply.

In the related art, the system for charging control may identify the power supply mode according to the phase voltages detected at the M phases of first terminals. For example, when M is equal to 3 and if the phase voltages detected at the three phases of first terminals are greater than a certain voltage threshold, it may be determined that the power supply mode of the external power supply is a three-phase current mode. However, because there may be a capacitor for voltage stabilization or filtering in the charging circuit 103, under the action of the capacitor, the detected phase voltage may be inconsistent with an input of the external power supply. For example, if the external power supply is single-phase current, only the phase A has a voltage input. However, under the effect of the capacitor, non-zero voltages may be also detected in other two phases, so that the power supply mode is mistakenly identified.

To solve the above problems, the present disclosure provides a method and system for charging control and a vehicle. By acquiring the phase voltage and the line voltage, through combined judgment on the phase voltage and the line voltage, the power supply mode of the external power supply is identified, so that the power supply mode identification accuracy can be improved, the problem of mistakenly identifying the power supply mode is avoided, and therefore, the problem of low charging efficiency or inability to charge caused by mistakenly identifying the power supply mode is also avoided.

Specific implementations of the present disclosure are described in detail below with reference to the accompanying drawings.

As shown in FIG. 1, the controller 101 in the system for charging control provided by the embodiment of the present disclosure may be configured to:
when a first end of a switching circuit is connected to external power supply, acquire a phase voltage and a line voltage of any two-phase first terminals in M phases of first terminals; determine a power supply mode of the external power supply according to the phase voltage and the line voltage; and control the switching circuit and a charging circuit to charge a target battery according to the power supply mode.

Exemplarily, the controller may acquire a voltage value between a first any-phase terminal of the M phases of first terminals of the switching circuit shown in FIG. 1 and a zero line, and the voltage value is taken as a phase voltage corresponding to the first terminal. For example, the M phases of first terminals may at least include a first-phase first terminal and a second-phase first terminal. A first phase voltage of the first-phase first terminal and a second phase voltage of the second-phase first terminal may be acquired; then a difference value between the first phase voltage and the second phase voltage is taken as the line voltage.

It should be noted that if the phase voltages of the M phases of first terminals are less than or equal to a preset minimum voltage value, for example, the phase voltages are 0, it may be determined that the first end of the switching circuit is not connected to the external power supply. If the phase voltage of any one-phase first terminal in the M phases of first terminals is greater than the preset minimum voltage value, it may be determined that the first end of the switching circuit is connected to the external power supply. The preset minimum voltage value may be any preset voltage value, for example, 10V or 220V.

In another embodiment of the present disclosure, the M phases of first terminals include three phases of first terminals. The power supply mode of the external power supply includes a single-phase current mode and a three-phase current mode. The controller may be configured to:
if the phase voltage is greater than or equal to the line voltage, determine the power supply mode of the external power supply to be the single-phase current mode; if the power supply mode is the single-phase current mode, control the charging circuit to charge the target battery according to a single-phase charging mode, where the single-phase charging mode may include a single-phase interlaced charging mode or a single-phase non-interlaced charging mode;
or, if the phase voltage is less than the line voltage, determine the power supply mode of the external power supply to be the three-phase current mode; and if the power supply mode is the three-phase current mode, control the charging circuit to charge the target battery according to a three-phase charging mode.

It should be noted that when the power supply mode of the external power supply is the three-phase current mode, theoretically, instantaneous values of the phase voltages at the three phases of first terminals are vectors with same amplitude and different phases by 120 degrees. Therefore, effective values of the phase voltages at the three phases of first terminals are approximately equal, effective values of the line voltages between every two phases of first terminals are also approximately equal, and the line voltages are about 1.414 times the phase voltages.

When the power supply mode of the external power supply is the single-phase current mode, in an ideal state, the phase voltage of only one-phase first terminal is greater than 0 (for example, the first-phase first terminal), and the phase voltages of the other two-phase first terminals both are zero (for example, the first phase voltage of the first-phase first terminal is greater than 0, and theoretical values of the second phase voltage of the second-phase first terminal and the third phase voltage of the three-phase first terminal both are 0). However, in an actual system for charging control, because there is a capacitor X for voltage stabilization or filtering in the charging circuit, even in the single-phase current mode, the other second phase voltage and third phase voltage will also be greater than 0. Therefore, it is likely to mistakenly determine the power supply mode of the external power supply by judging whether the three phase voltages are 0. It is found by the inventors that in the single-phase current mode, because the second phase voltage and the third phase voltage caused by the capacitor X are equal to the first phase voltage in phase, i.e., there is no 120-degree phase difference of the above three-phase current mode, so that the phase voltage acquired in the single-phase current mode is greater than or equal to the line voltage; and according to the above analysis, the phase voltage in the three-phase current mode is less than the line voltage. Therefore, with adoption of the above mode, the power supply mode of the external power supply may be acquired accurately according to the phase voltage and the line voltage.

Thus, with adoption of the above system, when the first end of the switching circuit is connected to the external power supply, the phase voltage and the line voltage of any two phases of first terminals in the M phases of first terminals are acquired; the power supply mode of the external power supply is determined according to the phase voltage and the line voltage; and the switching circuit and the charging circuit are controlled to charge the target battery according to the power supply mode. Thus, through combined judgment on the phase voltage and the line voltage, the power supply mode of the external power supply is identified, so that the power supply mode identification accuracy can be improved, the problem of mistakenly identifying the power supply mode is avoided, and therefore, the problem of low charging efficiency or inability to charge caused by mistakenly identifying the power supply mode is also avoided.

FIG. 2 is a block diagram of another system for charging control provided by an embodiment of the present disclosure. As shown in FIG. 2, the M phases of first terminals include three phases of first terminals, and the power supply mode of the external power supply includes a single-phase current mode and a three-phase current mode. The three phases of first terminals may include an A-phase terminal, a B-phase terminal and a C-phase terminal. The second end of the switching circuit includes an A'-phase terminal, a B'-phase terminal and a C'-phase terminal. The switching circuit may further include a first switch S1, a second switch S2 and a third switch S3. The first switch is configured to connect the A-phase terminal to the A'-phase terminal. The second switch is configured to connect the B-phase terminal to the B'-phase terminal. The third switch is configured to connect the C-phase terminal to the C'-phase terminal. The switching circuit may further include a first precharge resistor Rx1, a second precharge resistor Rx2 and a third precharge resistor Rx3. The first precharge resistor Rx1 is connected to the first switch S1 in parallel. The second precharge resistor Rx2 is connected to the second switch S2 in parallel. The third precharge resistor Rx3 is connected to the third switch S3 in parallel. The first end of the charging circuit 103 may further be connected to a zero line interface LN of the external power supply.

The controller may be configured to:
when the power supply mode is the three-phase current mode, acquire a first difference value between the line voltage and a first bus voltage of the charging circuit; and if the first difference value is less than or equal to a first voltage threshold, control the first switch, the second switch, and the third switch to be switched on, and control the charging circuit to charge the target battery according to the three-phase charging mode.

The first voltage threshold may be 0 or a less voltage value (for example 2V or 10V).

It should be noted that the first switch, the second switch, and the third switch of the system for charging control are in a switched-off state by default. Thus, when charging is started, the switches are in the switched-off state, so that the target battery may be precharged through the first precharge resistor, the second precharge resistor, and the third precharge resistor, which avoids damage of components inside the system for charging control as a result of a too high initial charging voltage, thereby improving the reliability of the system for charging control.

Further, as shown in FIG. 2, the switching circuit may further include a fourth switch S4. The fourth switch is configured to connect the A-phase terminal to the B-phase terminal. The controller may further be configured to:
if the power supply mode is the single-phase current mode, acquire a second difference value between the phase voltage and a second bus voltage of the charging circuit; and
when the second difference value is less than or equal to a second voltage threshold, control the first switch, the second switch, and the fourth switch to be switched on, control the third switch to be switched off, and control the charging circuit to charge the target battery according to a single-phase charging mode.

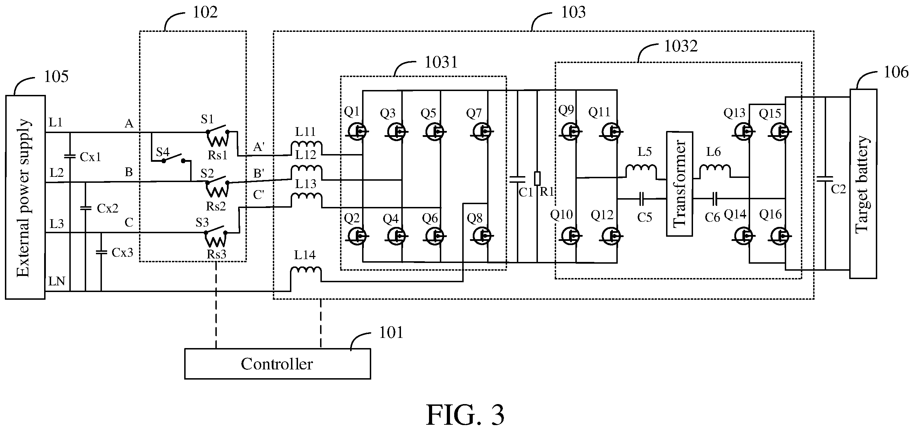

FIG. 3 is a block diagram of another system for charging control provided by an embodiment of the present disclosure. As shown in FIG. 3, the charging circuit 103 may include a power factor correction circuit 1031 and an inverter circuit 1032. The power factor correction circuit may include three-phase first bridge arms and a one-phase second bridge arm. The first-phase first bridge arm may be formed by connecting a switch tube Q1 and a switch tube Q2 in series. The second-phase first bridge arm may be formed by connecting a switch tube Q3 and a switch tube Q4 in series. The third-phase first bridge arm may be formed by connecting a switch tube Q5 and a switch tube Q6 in series. The second bridge arm may be formed by connecting a switch tube Q7 and a switch tube Q8 in series. The switch tubes Q1-Q8 may be IGBTs or MOS transistors.

The power factor correction circuit 1031 may convert an alternating current inputted by the external power supply into a direct current, which is transmitted to the inverter circuit 1032 for the convenience of charging the target battery.

For example, the controlling the charging circuit to charge the target battery according to a three-phase charging mode may include the following steps. The switch tube Q1 and the switch tube Q2 are controlled to conduct complementarily, the switch tube Q3 and the switch tube Q4 are controlled to conduct complementarily, and the switch tube Q5 and the switch tube Q6 are controlled to conduct complementarily according to the phase of the external three-phase power supply. The switch tube Q7 is in a switched-on state and the switch tube Q8 is in a switched-off state. Therefore, the three-phase alternating current inputted by the external power supply is converted into the direct current, which is transmitted to the inverter circuit.

For another example, the controlling the charging circuit to charge the target battery according to a single-phase interlaced charging mode may include the following steps. The switch tubes Q5/Q6 both are controlled to be in the switched-off state. The switch tube Q1 and the switch tube Q2 are controlled to conduct complementarily, the switch tube Q3 and the switch tube Q4 are controlled to conduct complementarily, and the switch tube Q7 and the switch tube Q8 are controlled to conduct complementarily according to the phase of the external power supply. Therefore, the alternating current inputted by the external power supply is converted into the direct current, which is transmitted to the inverter circuit.

For another example, the controlling the charging circuit to charge the target battery according to a single-phase non-interlaced charging mode may include the following steps. The switch tubes Q3/Q4/Q5/Q6 are controlled to be in the switched-off state. The switch tube Q1 and the switch tube Q2 are controlled to conduct complementarily, and the switch tube Q7 and the switch tube Q8 are controlled to conduct complementarily according to the phase of the external power supply. Therefore, the single-phase alternating current inputted by the external power supply is converted into the direct current, which is transmitted to the inverter circuit.

Thus, through normal bridge arms in the three-phase first bridge arms and the second bridge arm, the alternating current inputted by the external power supply may be converted into the direct current according to different modes, which is transmitted to the inverter circuit, and the target battery is charged through the inverter circuit.

Further, as shown in FIG. 3, the charging circuit 103 may further include a first inductor L11, a second inductor L12, a third inductor L13 and a fourth inductor L14. A midpoint of the first-phase first bridge arm may be connected to the A'-phase terminal of the second end of the switching circuit through the first inductor L11. A midpoint of the second-phase first bridge arm may be connected to the B'-phase terminal of the second end of the switching circuit through the second inductor L12. A midpoint of the third-phase first bridge arm may be connected to the C'-phase terminal of the second end of the switching circuit through the third inductor L13. A midpoint of the second bridge arm may be connected to the zero line interface LN of the external power supply through the fourth inductor L14.

Optionally, the system for charging control may further include a first voltage stabilizing capacitor Cx1, a second voltage stabilizing capacitor Cx2 and a third voltage stabilizing capacitor Cx3. The first voltage stabilizing capacitor Cx1 is configured to connect the A-phase terminal to the N-phase terminal. The second voltage stabilizing capacitor Cx2 is configured to connect the B-phase terminal to the N-phase terminal. The third voltage stabilizing capacitor Cx3 is configured to connect the C-phase terminal to the N-phase terminal. Thus, through the above three voltage stabilizing capacitors, the voltage inputted by the external power supply may be filtered, and devices of the system for charging control are prevented from being damaged by voltage fluctuation, so that the reliability of the system for charging control is improved.

In another embodiment of the present disclosure, as shown in FIG. 3, the inverter circuit 1032 may include a transformer. A low voltage side of the transformer is connected to a first full-bridge switching circuit. A high voltage side of the transformer is connected to a second full-bridge switching circuit. The first full-bridge switching circuit includes two bridge arms formed by switch tubes Q9-Q12. The second full-bridge switching circuit includes two bridge arms formed by switch tubes Q13-Q16. The switch tubes Q9-Q12 may be synchronous rectifier tubes. In the switch tubes Q13-Q16, the switch tubes Q13 and Q14 conduct complementarily at variable frequencies, and the switch tubes Q15 and Q16 conduct complementarily at variable frequencies. The inverter circuit may be used for high voltage transformation on the direct current provided by the power factor correction circuit when the vehicle is in a charging mode, so as to charge the power battery in the vehicle.

Further, a first capacitor C1 and a first resistor R1 may be connected between the power factor correction circuit 1031 and the inverter circuit 1032. The direct current outputted by the power factor correction circuit may be subjected to filtering and voltage stabilization through the first capacitor C1 and the first resistor R1. Similarly, a second capacitor C2 may also be connected between the inverter circuit 1032 and a target battery to perform filtering and voltage stabilization on the voltage outputted by the inverter circuit.

It should be noted that upon ending single-phase charging, the system for charging control needs to switch off the fourth switch S4. However, the fourth switch S4 may have a fault under certain circumstances. For example, the fourth switch may be sintered (i.e., in a short-circuited state) due to an excessive current. If the fourth switch has a short circuit and charging is performed according to the three-phase current mode again, two live line interfaces of the external power supply (for example, the two live line interfaces L1 and L2 in FIG. 3) may be short-circuited by the fourth switch, resulting in a fault of the external power supply. Therefore, in another embodiment of the present disclosure, the controller may further be configured to detect the fourth switch in mode I or mode II to determine whether the fourth switch has a short circuit:
Mode I: When the charging circuit is controlled to end charging of the target battery according to the single-phase charging mode, the first switch, the second switch, the third switch, and the fourth switch are controlled to be switched off. A third voltage of the A-phase terminal and a fourth voltage of the B'-phase terminal are acquired. If the third voltage is greater than or equal to a third voltage threshold and the fourth voltage is greater than or equal to a fourth voltage threshold, it is determined that the fourth switch has a short circuit.

In this mode, after single-phase charging is ended, the external power supply may still be kept conducted, i.e., there is still a current inputted from the external power supply. Thus, the A-phase terminal is still kept in an electric state, and therefore, the third voltage of the A-phase terminal may be greater than or equal to the third voltage threshold. If the fourth switch is normally switched off, currents at the B-phase terminal and the B'-phase terminal may disappear as well. If the fourth switch has a short circuit, i.e., even if the controller controls the fourth switch to be switched off, the fourth switch is still in a short-circuited state, such that there exists the charging circuit, with a current flow direction being as follows: the first live line interface L1 of the external power supply->the A-phase port of the switching circuit->the short-circuited fourth switch->the second precharge resistor Rs2 of the switching circuit->the B'-phase terminal of the switching circuit. Therefore, there exists a certain voltage (for example, the voltage is greater than or equal to the fourth voltage threshold) at the B'-phase terminal. The third voltage threshold and the fourth voltage threshold may be preset according to the voltage of the external power supply. The fourth voltage threshold may be less than the third voltage threshold, for example, the third voltage threshold may be 220V or 380V. The fourth voltage threshold may be 200V or 360V.

Mode II: When the charging circuit is controlled to end charging of the target battery according to the single-phase charging mode, the first switch, the second switch, the third switch, and the fourth switch are controlled to be switched off, and the external power supply is controlled to stop supplying electricity. A direct current voltage of the target battery is inverted into single-phase current through the inverter circuit and the power factor correction circuit, and the single-phase current is transmitted to the A-phase terminal. A fifth voltage of the A-phase terminal and a sixth voltage of the B-phase terminal are acquired. If the fifth voltage is greater than or equal to a fifth voltage threshold and the sixth voltage is greater than or equal to a sixth voltage threshold, it is determined that the fourth switch has a short circuit.

Exemplarily, the external power supply may be a charging pile. The charging circuit may send a message according to a charging pile protocol to control the charging pile to stop supplying electricity, i.e., there are no currents outputted from the L1/L2/L3 of the external power supply. In this case, to detect whether the fourth switch has a short circuit, the direct current voltage of the target battery may be inverted into the single-phase current through the inverter circuit and the power factor correction circuit, and the single-phase current is transmitted to the A-phase terminal. Similarly, in this case, if the fourth switch is normally switched off, there is no current or voltage at the B-phase terminal. If the fourth switch has a short circuit, i.e., even if the controller controls the fourth switch to be switched off, the fourth switch is still in a short-circuited state, with a current flow direction being as follows: the A'-phase terminal of the switching circuit->the first precharge resistor Rs1 of the switching circuit-> the A-phase port of the switching circuit-> the short-circuited fourth switch-> the B-phase terminal of the switching circuit->the capacitor Cx2. Therefore, there exists a certain voltage (for example, the voltage is greater than or equal to the sixth voltage threshold) at the B-phase terminal. The fifth voltage threshold and the sixth voltage threshold may be preset according to the voltage of the power battery. The sixth voltage threshold may be less than the fifth voltage threshold, for example, the fifth voltage threshold may be 220V or 380V. The sixth voltage threshold may be 200V or 360V.

It should be noted that the inverter circuit may be a bidirectional inverter circuit, which may not only transform the voltage of the direct current outputted by the power factor correction circuit to charge the target battery, but also transform the voltage of the direct current of the target battery and output the direct current to the power factor correction circuit.

With adoption of mode I or mode II, whether the fourth switch has a short circuit may be detected after charging of the target battery according to the single-phase charging mode is ended.

Further, if the fourth switch has a short circuit, the controller generates warning information including the short circuit fault and exhibits the warning information through a display device, for example, exhibits the warning information through a vehicle-mounted display screen or exhibits the warning information by way of a sound or an indicator light, so as to prompt a user to process the fault of the charging circuit. In addition, the controller may further record a fault state of the fourth switch, prohibit charging the target battery through the three-phase charging mode during next charging, and use the single-phase charging mode to charge the target battery.

Thus, the reliability of the system for charging control may further be improved.

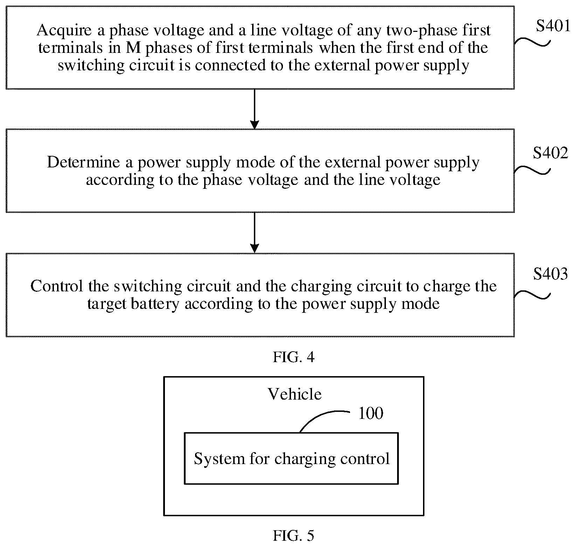

FIG. 4 is a flowchart of a method for charging control provided by an embodiment of the present disclosure. As shown in FIG. 4, an executive body of the method may be the controller in the system for charging control. The system for charging control may include a controller, a switching circuit, and a charging circuit. A first end of the switching circuit is connected to external power supply. A second end of the switching circuit is connected to a first end of the charging circuit. A second end of the charging circuit is connected to a target battery to be charged. The controller is connected to the switching circuit and the charging circuit. The first end of the switching circuit includes M phases of first terminals. The M phases of first terminals are connected to live line interfaces of the external power supply. The method may include the following step.

S401: When the first end of the switching circuit is connected to the external power supply, a phase voltage and a line voltage of any two-phase first terminals in the M phases of first terminals are acquired.

Exemplarily, a voltage value between a first any-phase terminal of the M phases of first terminals of the switching circuit shown in FIG. 1 and a zero line may be acquired, and the voltage value is taken as a phase voltage corresponding to the first terminal. For example, the M phases of first terminals may at least include a first-phase first terminal and a second-phase first terminal. A first phase voltage of the first-phase first terminal and a second phase voltage of the second-phase first terminal may be acquired; then a difference value between the first phase voltage and the second phase voltage is taken as the line voltage.

It should be noted that if the phase voltages of M phases of first terminals are less than or equal to a preset minimum voltage value, for example, the phase voltages are 0, it may be determined that the first end of the switching circuit is not connected to the external power supply. If the phase voltage of any one-phase first terminal in the M phases of first terminals is greater than the preset minimum voltage value, it may be determined that the first end of the switching circuit is connected to the external power supply. The preset minimum voltage value may be any preset voltage value, for example, 10V or 220V.

S402: A power supply mode of the external power supply is determined according to the phase voltage and the line voltage.

S403: The switching circuit and the charging circuit are controlled to charge the target battery according to the power supply mode.

For example, if the phase voltage is greater than or equal to the line voltage, it may be determined that the power supply mode of the external power supply is the single-phase current mode. If the power supply mode is the single-phase current mode, the charging circuit may be controlled to charge the target battery according to the single-phase interlaced charging mode.

For another example, if the phase voltage is less than the line voltage, it may be determined that the power supply mode of the external power supply is the three-phase current mode. If the power supply mode is the three-phase current mode, the charging circuit is controlled to charge the target battery according to a three-phase charging mode.

With adoption of the above method, when the first end of the switching circuit is connected to the external power supply, the phase voltage and the line voltage of any two phases of first terminals in the M phases of first terminals are acquired. The power supply mode of the external power supply is determined according to the phase voltage and the line voltage. The switching circuit and the charging circuit are controlled to charge the target battery according to the power supply mode. Thus, through combined judgment on the phase voltage and the line voltage, the power supply mode of the external power supply is identified, so that the power supply mode identification accuracy can be improved, the problem of mistakenly identifying the power supply mode is avoided, and therefore, the problem of low charging efficiency or inability to charge caused by mistakenly identifying the power supply mode is also avoided.

In another embodiment of the present disclosure, the three phases of first terminals include an A-phase terminal, a B-phase terminal and a C-phase terminal. The second end of the switching circuit includes an A'-phase terminal, a B'-phase terminal and a C'-phase terminal. The switching circuit further includes a first switch, a second switch, a third switch, a first precharge resistor, a second precharge resistor and a third precharge resistor. The first switch is configured to connect the A-phase terminal to the A'-phase terminal. The second switch is configured to connect the B-phase terminal to the B'-phase terminal. The third switch is configured to connect the C-phase terminal to the C'-phase terminal. The first precharge resistor is connected to the first switch in parallel. The second precharge resistor is connected to the second switch in parallel. The third precharge resistor is connected to the third switch in parallel.

Thus, the above S403 may include the following sub-steps.

First, when the power supply mode is the three-phase current mode, a first difference value between the line voltage and a first bus voltage of the charging circuit is acquired.

Second, if the first difference value is less than or equal to a first voltage threshold, the first switch, the second switch, and the third switch are controlled to be switched on, and the charging circuit is controlled to charge the target battery according to the three-phase charging mode.

Further, the switching circuit further includes a fourth switch. The fourth switch is configured to connect the A-phase terminal to the B-phase terminal. Thus, the above S403 may further include the following sub-steps.

First, when the power supply mode is the single-phase current mode, a second difference value between the phase voltage and a second bus voltage of the charging circuit is acquired.

Second, if the second difference value is less than or equal to a second voltage threshold, the first switch, the second switch, and the fourth switch are controlled to be switched on, the third switch is controlled to be switched off, and the charging circuit is controlled to charge the target battery according to a single-phase charging mode.

Upon ending single-phase charging, the system for charging control needs to switch off the fourth switch S4. However, the fourth switch S4 may have a fault under certain circumstances. For example, the fourth switch may be sintered (i.e., in a short-circuited state) due to an excessive current. If the fourth switch has a short circuit and charging is performed according to the three-phase current mode again, two live line interfaces of the external power supply (for example, the two live line interfaces L1 and L2 in FIG. 3) may be short-circuited by the fourth switch, resulting in a fault of the external power supply. Therefore, in another embodiment of the present disclosure, the method for charging control may further detect the fourth switch in mode I or mode II to determine whether the fourth switch has a short circuit.

Mode I: When the charging circuit is controlled to end charging of the target battery according to the single-phase charging mode, the first switch, the second switch, the third switch, and the fourth switch are controlled to be switched off. A third voltage of the A-phase terminal and a fourth voltage of the B'-phase terminal are acquired. If the third voltage is greater than or equal to a third voltage threshold and the fourth voltage is greater than or equal to a fourth voltage threshold, it is determined that the fourth switch has a short circuit.

Mode II: When the charging circuit is controlled to end charging of the target battery according to the single-phase charging mode, the first switch, the second switch, the third switch, and the fourth switch are controlled to be switched off, and the external power supply is controlled to stop supplying electricity. A direct current voltage of the target battery is inverted into single-phase current through the inverter circuit and the power factor correction circuit, and the single-phase current is transmitted to the A-phase terminal. A fifth voltage of the A-phase terminal and a sixth voltage of the B-phase terminal are acquired. If the fifth voltage is greater than or equal to a fifth voltage threshold and the sixth voltage is greater than or equal to a sixth voltage threshold, it is determined that the fourth switch has a short circuit.

Further, if the fourth switch has a short circuit, the controller generates warning information including the short circuit fault and exhibits the warning information through a display device, for example, exhibits the warning information through a vehicle-mounted display screen or exhibits the warning information by way of a sound or an indicator light, so as to prompt a user to process the fault of the charging circuit. In addition, the controller may further record a fault state of the fourth switch, prohibit charging the target battery through the three-phase charging mode during next charging, and use the single-phase charging mode to charge the target battery.

Thus, the reliability of the system for charging control may further be improved.

It should be noted that for specific implementations of various steps in the above method embodiment, reference may be made to detailed description in the above system for charging control embodiment, which will not be illustrated or described in detail herein.

FIG. 5 is a block diagram of a vehicle provided by an embodiment of the present disclosure. As shown in FIG. 5, the vehicle includes: the system for charging control 100.

The implementations of the present disclosure are described in detail above with reference to the accompanying drawings. However, the present disclosure is not limited to the specific details in the foregoing implementations, a number of simple deformations may be made to the technical solution of the present disclosure within a range of the technical concept of the present disclosure, and these simple deformations fall within the protection scope of the present disclosure.

It should be additionally noted that the various specific technical features described in the foregoing specific implementations may be combined in any proper manner without conflict. To avoid unnecessary repetition, various possible combination manners are not described in the present disclosure.

In addition, various different implementations of the present disclosure may also be arbitrarily combined without departing from the idea of the present disclosure, and these combinations shall still be regarded as the content disclosed in the present disclosure.

## Claims

1. A method for charging control, wherein: the method of charging control is applied to a controller (101) in a system for charging control (100), the system for charging control (100) comprises the controller (101), a switching circuit (102) and a charging circuit (103), a first end of the switching circuit (102) is connected to external power supply (105), a second end of the switching circuit (102) is connected to a first end of the charging circuit (103), a second end of the charging circuit (103) is connected to a target battery (106) to be charged, and the controller (101) is connected to the switching circuit (102) and the charging circuit (103); and the first end of the switching circuit (102) comprises M phases of first terminals, and the M phases of first terminals are connected to live line interfaces of the external power supply (105); and the method comprising:
when the first end of the switching circuit (102) is connected to the external power supply (105), acquiring a phase voltage and a line voltage of any two-phase first terminals in the M phases of first terminals;
determining a power supply mode of the external power supply (105) according to the phase voltage and the line voltage; and
controlling the switching circuit (102) and the charging circuit (103) to charge the target battery (106) according to the power supply mode.

2. The method according to claim 1, wherein the M phases of first terminals comprise three phases of first terminals, and the power supply mode of the external power supply (105) comprises a single-phase current mode and a three-phase current mode; and the determining a power supply mode of the external power supply (105) according to the phase voltage and the line voltage comprises:
if the phase voltage is greater than or equal to the line voltage, determining that the power supply mode of the external power supply (105) is the single-phase current mode; and
if the phase voltage is less than the line voltage, determining that the power supply mode of the external power supply (105) is the three-phase current mode.

3. The method according to claim 2, wherein the three phases of first terminals comprise an A-phase terminal, a B-phase terminal and a C-phase terminal, and the second end of the switching circuit (102) comprises an A'-phase terminal, a B'-phase terminal and a C'-phase terminal; the switching circuit (102) further comprises a first switch (S1), a second switch (S2), a third switch (S3), a first precharge resistor (Rs1), a second precharge resistor (Rs2), and a third precharge resistor (Rs3), the first switch (S1) is configured to connect the A-phase terminal to the A'-phase terminal, the second switch (S2) is configured to connect the B-phase terminal to the B'-phase terminal, the third switch (S3) is configured to connect the C-phase terminal to the C'-phase terminal, the first precharge resistor (Rs1) is connected to the first switch (S1) in parallel, the second precharge resistor (Rs2) is connected to the second switch (S2) in parallel, and the third precharge resistor (Rs3) is connected to the third switch (S3) in parallel; and
the controlling the switching circuit (102) and the charging circuit (103) to charge the target battery (106) according to the power supply mode comprises:
when the power supply mode is the three-phase current mode, acquiring a first difference value between the line voltage and a first bus voltage of the charging circuit (103); and
if the first difference value is less than or equal to a first voltage threshold, controlling the first switch (S1), the second switch (S2) and the third switch (S3) to be switched on, and controlling the charging circuit (103) to charge the target battery (106) according to a three-phase charging mode.

4. The method according to claim 3, wherein the switching circuit (102) further comprises a fourth switch (S4), the fourth switch (S4) is configured to connect the A-phase terminal to the B-phase terminal; and the controlling the switching circuit (102) and the charging circuit (103) to charge the target battery (106) according to the power supply mode further comprises:
when the power supply mode is the single-phase current mode, acquiring a second difference value between the phase voltage and a second bus voltage of the charging circuit (103); and
if the second difference value is less than or equal to a second voltage threshold, controlling the first switch (S1), the second switch (S2) and the fourth switch (S4) to be switched on, controlling the third switch (S3) to be switched off, and controlling the charging circuit (103) to charge the target battery (106) according to a single-phase charging mode.

5. The method according to claim 4, further comprising:
when the charging circuit (103) is controlled to end charging of the target battery (106) according to the single-phase charging mode, controlling the first switch (S1), the second switch (S2), the third switch (S3), and the fourth switch (S4) to be switched off;
acquiring a third voltage of the A-phase terminal and a fourth voltage of the B'-phase terminal; and
if the third voltage is greater than or equal to a third voltage threshold and the fourth voltage is greater than or equal to a fourth voltage threshold, determining that the fourth switch (S4) has a short circuit.

6. The method according to claim 4 or 5, wherein the charging circuit (103) comprises a power factor correction circuit (1031) and an inverter circuit (1032), the second end of the switching circuit (102) being connected to a first end of the power factor correction circuit (1031), a second end of the power factor correction circuit (1031) being connected to a first end of the inverter circuit (1032), and a second end of the inverter circuit (1032) being connected to the target battery (106), the method further comprising:
when the charging circuit (103) is controlled to end charging of the target battery (106) according to the single-phase charging mode, controlling the first switch (S1), the second switch (S2), the third switch (S3) and the fourth switch (S4) to be switched off, and controlling the external power supply (105) to stop supplying electricity;
inverting a direct current voltage of the target battery (106) into single-phase power supply through the inverter circuit (1032) and the power factor correction circuit (1031), and transmitting the single-phase current to the A-phase terminal;
acquiring a fifth voltage of the A-phase terminal and a sixth voltage of the B-phase terminal; and
if the fifth voltage is greater than or equal to a fifth voltage threshold and the sixth voltage is greater than or equal to a sixth voltage threshold, determining that the fourth switch (S4) has a short circuit.

7. The method according to any one of claims 4-6, further comprising:
when the fourth switch (S4) has a short circuit, recording, by the controller (101), a fault state of the fourth switch (S4), and controlling the system for charging control (100) to use the single-phase charging mode to charge the target battery (106) during next charging.

8. A system for charging control (100), comprising: a controller (101), a switching circuit (102) and a charging circuit (103), a first end of the switching circuit (102) being connected to external power supply (105), a second end of the switching circuit (102) being connected to a first end of the charging circuit (103), a second end of the charging circuit (103) being connected to a target battery (106) to be charged, and the controller (101) being connected to the switching circuit (102) and the charging circuit (103); and the first end of the switching circuit (102) comprising M phases of first terminals, and the M phases of first terminals being connected to live line interfaces of the external power supply (105); and the controller (101) being configured to:
when the first end of the switching circuit (102) is connected to the external power supply (105), acquire a phase voltage and a line voltage of any two-phase first terminals in the M phases of first terminals;
determine a power supply mode of the external power supply (105) according to the phase voltage and the line voltage; and
control the switching circuit (102) and the charging circuit (103) to charge the target battery (106) according to the power supply mode.

9. The system according to claim 8, wherein the M phases of first terminals comprise three phases of first terminals, and the controller (101) is configured to:
if the phase voltage is greater than or equal to the line voltage, determine the power supply mode of the external power supply (105) to be the single-phase current mode; and
if the phase voltage is less than the line voltage, determine the power supply mode of the external power supply (105) to be the three-phase current mode.

10. The system according to claim 9, wherein the three phases of first terminals comprise an A-phase terminal, a B-phase terminal and a C-phase terminal, and the second end of the switching circuit (102) comprises an A'-phase terminal, a B'-phase terminal and a C'-phase terminal; the switching circuit (102) further comprises a first switch (S1), a second switch (S2), a third switch (S3), a first precharge resistor (Rs1), a second precharge resistor (Rs2) and a third precharge resistor (Rs3), the first switch (S1) is configured to connect the A-phase terminal to the A'-phase terminal, the second switch (S2) is configured to connect the B-phase terminal to the B'-phase terminal, the third switch (S3) is configured to connect the C-phase terminal to the C'-phase terminal, the first precharge resistor (Rs1) is connected to the first switch (S1) in parallel, the second precharge resistor (Rs2) is connected to the second switch (S2) in parallel, and the third precharge resistor (Rs3) is connected to the third switch (S3) in parallel; and
the controller (101) is configured to:
when the power supply mode is the three-phase current mode, acquire a first difference value between the line voltage and a first bus voltage of the charging circuit (103); and
if the first difference value is less than or equal to a first voltage threshold, control the first switch (S1), the second switch (S2) and the third switch (S3) to be switched on, and control the charging circuit (103) to charge the target battery (106) according to the three-phase charging mode.

11. A vehicle, comprising: the system for charging control (100) according to any one of claims 8-10.
